# DEMANDE DE BREVET EUROPEEN

(11) **EP 2 202 676 A1**
(43) Date de publication de la demande: **30.06.2010**
(21) Numéro de dépôt: 08306004.6
(22) Date de dépôt: 23.12.2008
(51) Int. Cl.: G06K 19/07, G07F 7/10, H04L 29/06

(54) **Dispositif de sécurisation à interface de communication radiofréquence**

(71) Demandeur: Gemalto SA, 92190 Meudon (FR)
(72) Inventeur: Gravez, Pierre, 92197, Meudon cedex (FR); Thill, Michel, 92197, Meudon cedex (FR)

(57) **Abrégé**

L'invention permet de bénéficier des moyens et mécanismes sécuritaires disponibles lors de la programmation d'un microcontrôleur 2 de carte à puce pour charger et personnaliser un composant RF 3 en lieu et place des outils de développements du dit composant RF 3. Pour réduire le temps de personnalisation, le dispositif peut utiliser le protocole de haute vitesse du composant RF 3 pour charger l'application finale ainsi que les données de personnalisation de l'utilisateur du produit. L'invention permet alors de garantir que le système bi-composant ne dégrade pas le niveau de sécurité tout au long du cycle de vie : fabrication, personnalisation, émission.

## Description

L'invention se rapporte à un dispositif de sécurisation à interface de communication radiofréquence. Plus particulièrement, l'invention se rapporte à des dispositif de type carte à puce ou équivalent disposant d'une interface de type radiofréquence à large bande.

Les nouvelles applications de sécurité numérique font largement appel à l'association d'un composant d'interface de communication haute vitesse grand public avec un microcontrôleur sécurisé tel que largement utilisé dans les cartes à puce. Ces interfaces de communication haute vitesse peuvent être notamment des interfaces de type radiofréquence (RF). A titre d'exemple, il existe de très nombreux composants compatibles avec différentes normes de communication telles que IEEE 802.15.4 ou IEEE 802.11. Ainsi, il est possible de munir une carte à puce d'une interface RF à haut débit en évitant de concevoir intégralement une interface RF dans un circuit intégré de carte à puce.

Les composants RF proposés sur le marché sont généralement des microcontrôleurs munis d'un modulateur/démodulateur fonctionnant dans la gamme RF souhaitée. Ces microcontrôleurs disposent en outre d'élément fonctionnels dédiés pour réaliser une communication RF ainsi que d'un ou plusieurs ports de communication programmable pour interfacer un circuit extérieur. Cependant, ces ports de communication ainsi que l'interface RF ne sont pas fonctionnel sans la présence d'un microcode propre à l'utilisation du composant.

Les vendeurs de microcontrôleurs du commerce proposent aux concepteurs des outils de développement afin de mettre au point et valider leurs applications logicielles. Pour les produits disposant d'une mémoire programme réinscriptible de type flash, l'outil permet alors de charger les programmes ou les routines de test via l'interface de mise au point piloté par un programme de téléchargement. Une fois ce chargement terminé, la commande d'invalidation du chargeur est exécutée validant le code en mémoire flash au prochain reset du composant. Ce n'est qu'à ce moment que le composant devient fonctionnel.

Pour utiliser un tel composant dans une carte à puce, il convient soit de charger le microcode avant l'assemblage dans la carte à puce ou après l'assemblage au moment de la personnalisation de la carte à puce. Le chargement du microcode avant assemblage demande un temps de chargement non négligeable qui devient pénalisant. En outre, il est difficile de sécuriser des informations dans ce composant à ce stade car le composant de sécurisation n'y est pas encore associé. Après assemblage, le port de chargement devient difficilement accessible.

Une solution est apportée par l'invention pour remédier aux problèmes précités. L'invention consiste à bénéficier des moyens et mécanismes sécuritaires disponibles lors de la programmation du microcontrôleur sécurisé de la carte à puce pour charger et personnaliser la mémoire programme du composant RF en lieu et place des outils de développements du dit composant d'interface. Pour éviter de trop allonger le temps de personnalisation de la carte à puce, l'ensemble sécurisé peut utiliser le protocole de haute vitesse du composant d'interface pour charger l'application finale ainsi que les données de personnalisation de l'utilisateur du produit. L'invention permet alors de garantir que le système bi-composant ne dégrade pas le niveau de sécurité tout au long du cycle de vie : fabrication, personnalisation, émission.

Plus particulièrement l'invention est un dispositif de sécurisation comprenant un connecteur, un premier circuit intégré et un deuxième circuit intégré. Le connecteur permet une connexion par contact du dispositif. Le premier circuit intégré inclut un microcontrôleur sécurisé relié par un premier port de communication au connecteur. Ledit premier circuit intégré dispose en outre d'un deuxième port de communication et d'un troisième port de communication. Le deuxième circuit intégré inclut une interface de communication radiofréquence, un quatrième port de communication, un cinquième port de communication et au moins une mémoire permettant de configurer l'interface de communication et le quatrième port de communication. Le quatrième port de communication est relié au deuxième port de communication et le cinquième port de communication est relié au troisième port de communication.

Préférentiellement, le cinquième port de communication est un port de configuration du deuxième circuit intégré qui est désactivé en utilisation normale du dispositif. Le premier circuit intégré est un microcontrôleur de carte à puce et le deuxième circuit intégré est un circuit de communication radiofréquence programmable. Le deuxième port de communication et le quatrième port de communication correspondent à un bus SPI. L'interface de communication est conforme à la norme IEEE 802.15.4.

Selon un autre aspect, l'invention est un procédé de personnalisation d'un dispositif sécurisé comportant un connecteur, une interface radiofréquence programmable et un microcontrôleur relié d'une part au connecteur et d'autre part à l'interface radiofréquence par deux liaisons distinctes. Ledit procédé comporte une étape de chargement à partir du connecteur d'un microcode permettant de configurer l'interface radiofréquence et l'une des deux liaisons, une étape de configuration de l'interface radiofréquence par le microcontrôleur sécurisé afin de pouvoir réaliser une communication radiofréquence sécurisée, et une étape de chargement à travers l'interface radiofréquence de microcode applicatif et de données personnelles dans le microcontrôleur sécurisé.

L'invention sera mieux comprise, et d'autres particularités et avantages apparaîtront à la lecture de la description qui va suivre, la description faisant référence aux dessins annexés, parmi lesquels :
la figure 1 représente un dispositif selon l'invention,
la figure 2 illustre le lien de communication entre le microcontrôleur sécurisé et le composant RF.

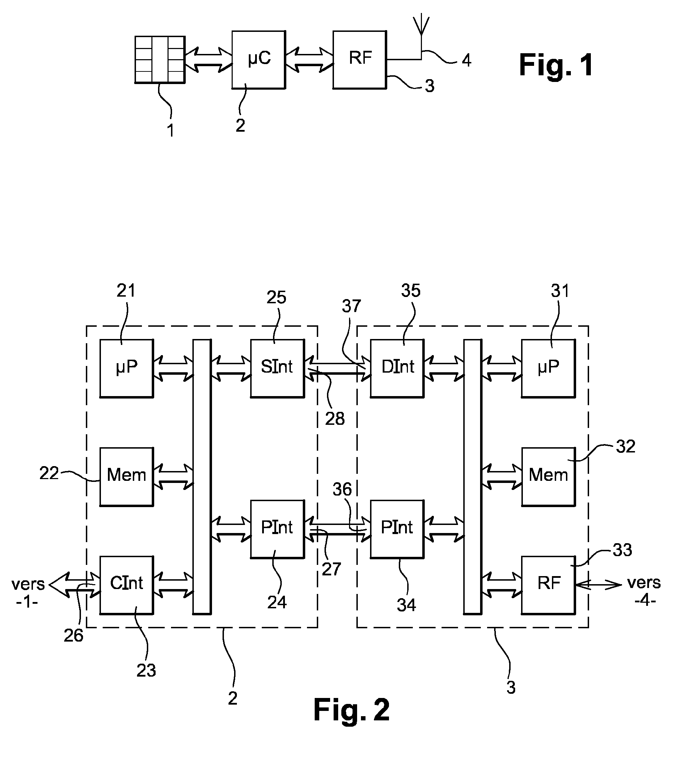

La figure 1 représente schématiquement les composants d'une carte à puce selon l'invention. La carte à puce comporte un connecteur 1, un microcontrôleur sécurisé 2, un circuit radiofréquence 3 et une antenne 4. Selon une technique connue d'assemblage de carte à puce, le connecteur 1 est muni d'un substrat isolant sur lequel le microcontrôleur sécurisé 2 est monté et relié par des fils de connexion aux plages de contact dudit connecteur 1. Le circuit RF 3 peut-être soit collé sur le substrat à côté du microcontrôleur 2 et relié à celui-ci par des fils de liaison ainsi qu'à une plage de contact situé du même coté que les circuits et destinée à venir en contact avec l'antenne 4 noyée dans le corps de carte (non représenté). Selon une autre technique, il est aussi possible de monter le circuit de communication 3 sur le microcontrôleur 2 et de les relier par contact direct ou par fils de liaison.

A titre d'exemple, le microcontrôleur 2 est un composant fabriqué par la société Atmel et vendu sous la référence AT91SC512384RCT et le circuit RF est un composant fabriqué par la société Texas Instrument et vendu sous la référence CC2430, ce composant étant conforme à la norme IEEE802.15.4.

La figure 2 donne plus de détails sur la constitution du microcontrôleur 2 et du circuit RF 3. Le microcontrôleur 2 comporte un microprocesseur 21, une banque de mémoires 22, une interface de communication 23 conforme à la norme ISO7816, une interface série 24 de type SPI prévu pour une extension mémoire de type Flash NOR et une interface parallèle 25 permettant de piloter une mémoire externe de type Flash NAND. Comme connu de l'homme du métier, un tel microcontrôleur 2 dispose d'autres circuits qui n'ont que peut de rapport avec l'invention et qui ne sont donc pas décrit dans la présente demande. La banque de mémoires 22 est composée de plusieurs types de mémoires comprenant de la mémoire RAM, de la mémoire ROM, de la mémoire non volatile de type EEPROM ou Flash NOR. La mémoire non volatile sert à mémoriser les programmes et autres données lors de la personnalisation de la carte. Cette mémoire NOR est une mémoire sécurisée dont l'accès peut être restreint. Le microprocesseur 21 contrôle l'ensemble des circuits 22 à 25 par l'intermédiaire d'un bus central.

Le circuit RF 3 comporte un microprocesseur 31, une banque de mémoires 32, une interface radiofréquence 33, une interface programmable de communication 34 et une interface de maintenance 35. Ce type de circuit peut comporter d'autres éléments qui ne sont pas représentés car ils n'ont pas de lien avec l'invention. La banque de mémoire 32 comporte de la mémoire RAM et de la mémoire non volatile. La mémoire non volatile permet de mémoriser un microcode qui permet de configurer le fonctionnement du circuit RF 3. Le microprocesseur 31 contrôle l'ensemble des circuits 32 à 35 par l'intermédiaire d'un bus central.

Le microcontrôleur 2 est relié au connecteur 1 par l'intermédiaire d'un premier port de communication 26 qui correspond à l'interface d communication 23. Le microcontrôleur 2 dispose d'un deuxième port 27 correspondant à l'interface série 24 et relié à un premier port 36 du circuit RF 3. Le microcontrôleur 2 dispose d'un troisième port 28 correspondant à l'interface parallèle 25 et relié à un deuxième port 37 du circuit RF 3. Le premier port 36 correspond à l'interface programmable de communication 34 et le deuxième port 37 correspond à l'interface de maintenance 35.

L'interface parallèle 25 est configurée pour communiquer avec l'interface de maintenance 35. Avec les circuits pris comme exemple, l'interface de maintenance 35 dispose de trois entrées : une pour les données, une pour une entrée d'horloge et une pour une entrée de remise à zéro. L'interface parallèle 35 est détournée de son mode de fonctionnement normal car un seul fil de données est utilisé pour les données, la sortie de sélection de mémoire (Chip Enable ou CE) est utilisée pour piloter la remise à zéro de l'interface de maintenance et le signal d'échantillonnage en écriture (Latch Enable) est utilisé pour piloter le signal d'horloge de l'interface de maintenance. L'interface programmable 34 est configurée en port série de type SPI pour communiquer avec l'interface série 24 qui est elle-même une interface série de type SPI.

Après assemblage de la carte, une première étape de personnalisation consiste à charger dans le microcontrôleur 2, via le connecteur 1, un microcode visant d'une part à configurer le fonctionnement de l'interface parallèle, et d'autre part à configurer l'interface radio fréquence 33 et l'interface programmable de communication 34. Le microcontrôleur 2 configure alors le circuit RF 3 par l'intermédiaire du troisième port 28 et de l'interface de maintenance 35. Eventuellement, il est aussi possible de configurer le microcontrôleur 2 et le circuit RF 3 pour établir une communication radio sécurisée par le microcontrôleur 2.

Une fois que le microcontrôleur 2 et le circuit RF 3 sont configurés pour établir une communication radio, une deuxième étape de personnalisation peut être effectuée par radiofréquence. Cette deuxième étape de personnalisation permet de télécharger dans le microcontrôleur 2 les programmes applicatifs et les données personnalisées. Cette deuxième étape est réalisée à travers le circuit RF 3.

La vitesse de transmission d'une interface ISO7816 est de l'ordre de quelques kilobits par seconde alors qu'une interface selon IEEE802.15.4 autorise quelques mégabits par seconde. Ainsi, les programmes applicatifs et les données de personnalisation sont transmis à la carte environ 1000 fois plus vite que par une interface ISO7816 conventionnelle. Seul le microcode permettant de configurer le microcontrôleur 2 et l'interface RF 3 est transmis à bas débit. Au bilan, le temps de personnalisation incluant les première et deuxième étapes de personnalisation est du même ordre de grandeur que le temps nécessaire à la personnalisation d'une carte conventionnelle alors si l'intégralité de la personnalisation était fait à travers la seule interface ISO7816, ce temps aurait doublé.

## Revendications

1. Dispositif de sécurisation comprenant :
- un connecteur (1) permettant une connexion par contact du dispositif,
- un premier circuit intégré (2) incluant un microcontrôleur sécurisé relié par un premier port (26) de communication au connecteur (1), ledit premier circuit intégré (2) disposant en outre d'un deuxième port (27) de communication et d'un troisième port (28) de communication,
- un deuxième circuit intégré (3) incluant une interface de communication radiofréquence (33), un quatrième port (36) de communication, un cinquième port (37) de communication et au moins une mémoire (32) permettant de configurer l'interface de communication (33) et le quatrième port (36) de communication, le quatrième port (36) de communication étant relié au deuxième port (27) de communication et le cinquième port (37) de communication étant relié au troisième port (28) de communication.

2. Dispositif selon la revendication 1, dans lequel le cinquième port (37) de communication est un port de configuration du deuxième circuit intégré (2) qui est désactivé en utilisation normale du dispositif.

3. Dispositif selon la revendication 1, dans lequel le premier circuit intégré (2) est un microcontrôleur de carte à puce et le deuxième circuit intégré (3) est un circuit de communication radiofréquence programmable.

4. Dispositif selon la revendication 1, dans lequel le deuxième port (27) de communication et le quatrième port (36) de communication correspondent à un bus SPI.

5. Dispositif selon la revendication 1, dans lequel l'interface de communication (33) est conforme à la norme IEEE 802.15.4.

6. Dispositif selon la revendication 1, dans lequel le dispositif est une carte à puce.

7. Procédé de personnalisation d'un dispositif sécurisé comportant un connecteur (1), une interface radiofréquence programmable (3) et un microcontrôleur (2) relié d'une part au connecteur et d'autre part à l'interface radiofréquence (3) par deux liaisons distinctes (25, 28, 35, 37, 24, 27, 34, 36), ledit procédé comportant les étapes suivantes :
- chargement à partir du connecteur (1) d'un microcode permettant de configurer l'interface radiofréquence (3) et l'une des deux liaisons (34, 36),
- configuration de l'interface radiofréquence (3) par le microcontrôleur sécurisé (2) afin de pouvoir réaliser une communication radiofréquence sécurisée,
- chargement à travers l'interface radiofréquence (3) de microcode applicatif et de données personnelles dans le microcontrôleur sécurisé (2).
